# FASCICULE DE BREVET EUROPEEN

(11) **EP 2 099 089 B1**
(45) Date de publication et mention de la délivrance du brevet: **22.08.2018**
(21) Numéro de dépôt: 09153682.1
(22) Date de dépôt: 25.02.2009
(51) Int. Cl.: H01M 10/48, H01M 10/42, G07F 7/10, H04M 1/02, G07G 1/00, G07G 1/12, G07F 7/08

(54) **Terminal de paiement électronique, procédé de vérification de conformité d'au moins une batterie amovible d'un tel terminal et produit programme d'ordinateur corespondants**
Endgerät zur elektronischen Bezahlung, Konformitätsverfahren mindestens eines abnehmbaren Akkus eines solchen Endgeräts und entsprechendes Computerprogrammprodukt
Electronic payment terminal, method for validating at least a detachable battery of said terminal, and corresponding computer program product

(30) Priorité: 07.03.2008 FR 0851506
(43) Date de publication de la demande: 09.09.2009
(73) Titulaire: Ingenico Group, 75015 Paris (FR)
(72) Inventeur: Naccache, David, 75018, PARIS (FR)
(74) Mandataire: Vidon Brevets & Stratégie

(56) Documents cités:
- WO-A-00/79771
- KR-A- 20070 025 337
- US-A- 5 629 981
- US-A1- 2003 102 842
- US-A1- 2007 123 304
- US-A1- 2007 188 131

## Description

### 1. Domaine de l'invention

Le domaine de l'invention est celui des terminaux de paiement électronique, et notamment des terminaux de paiement portables, ou mobiles.

Ces terminaux sont généralement équipés de batteries amovibles. Ces batteries, peuvent se détériorer au fil du temps, rendant nécessaire leur remplacement.

Il est important que les batteries de remplacement soient conformes aux prescriptions du fabricant ou du fournisseur du terminal, pour des raisons de sécurité, d'efficacité, de fiabilité et de garantie. Par exemple, l'usage d'une batterie non conforme peut endommager le terminal, ou nuire à son bon fonctionnement. Cet aspect peut être crucial, notamment dans le cadre de transactions bancaires. Une batterie non conforme est en outre, généralement, moins efficace que les batteries dites d'origine.

L'invention concerne plus particulièrement le contrôle de la conformité de batteries amovibles, dans des terminaux de paiement électronique.

### 2. Art antérieur

Le remplacement d'une batterie d'un terminal électronique ne nécessite pas de démontage du terminal, du fait du caractère amovible de cet équipement, et peut donc être réalisé simplement par les utilisateurs du terminal, hors du contrôle de son constructeur.

De plus, l'utilisation des terminaux électroniques étant très répandue, des batteries non conformes peuvent apparaître. Des documents de l'art antérieur, comme US2007/188131 ou US2003/102842 ont proposé des solutions pour prémunir les terminaux contre l'utilisation de batteries defectueuses en fournissant des listes de batteries non conformes.

Les batteries sont des équipements familiers pour un utilisateur. De ce fait, l'utilisateur a l'impression de bien les connaître, et peut être trompé sur son origine et sa conformité.

En effet, la forme d'une batterie, la compatibilité de son interface et les capacités électriques mentionnées sont souvent les seules caractéristiques visibles pour un utilisateur. Quand il souhaite se procurer une nouvelle batterie pour remplacer la batterie défectueuse de son terminal mobile, il peut être confronté à un choix de produits, parfois à des prix très différents. Le critère de choix est souvent le prix, car quelque soit le produit, l'utilisateur pense souvent acquérir un produit adéquat, similaire à sa batterie d'origine, en termes de qualité.

Or, comme indiqué plus haut, le niveau de qualité de ces batteries de remplacement n'est généralement pas le même que celui des batteries d'origine.

Par exemple, le temps de charge, le cycle de décharge ou l'autonomie de batteries peuvent être différents. De même, les caractéristiques de la batterie (tension, courant, impédance,...) peuvent être mauvaises, ou insuffisamment stables. De façon plus grave, la fiabilité de certaines batteries peut être insuffisante, faisant ainsi encourir un risque d'intégrité aux transactions réalisées sur un terminal équipé d'une telle batterie.

Ces problèmes peuvent se révéler particulièrement cruciaux dans le cas de terminaux de paiement électronique.

### 3. Objectifs de l'invention

L'invention a notamment pour objectif de pallier ces inconvénients de l'art antérieur.

Plus précisément, un objectif de l'invention, selon au moins un mode de réalisation, est d'améliorer le contrôle de la conformité d'une batterie amovible de remplacement.

Un autre objectif de l'invention est aussi, selon au moins un mode de réalisation, d'éviter la détérioration ou le mauvais fonctionnement d'un terminal du fait de l'utilisation d'une batterie amovible non conforme.

L'invention a aussi pour but, selon au moins un mode de réalisation, d'éviter la perturbation de transactions sensibles du fait de batteries défectueuses ou non conformes.

Un autre objectif de l'invention est de fournir une telle technique qui soit simple à mettre en oeuvre et peu coûteuse, au moins dans certains modes de réalisation.

Enfin, l'invention a également pour objectif, selon au moins un mode de réalisation, d'offrir une solution adaptée à l'utilisation éventuelle dans un terminal de batteries nouvellement apparues sur le marché, plus performantes ou plus économiques par exemple que le modèle de la batterie fournie initialement par le constructeur.

### 4. Exposé de l'invention

L'invention propose une solution nouvelle qui ne présente pas les inconvénients de l'art antérieur, notamment sous la forme d'un terminal de paiement électronique portable, comprenant au moins une batterie amovible, ladite batterie amovible portant une puce électronique contenant au moins une information d'identification et étant apte à communiquer avec des moyens de lecture sans contact présents dans ledit terminal, ledit terminal étant conforme à la revendication 1.

L'expression « moyens de lecture sans contact » désigne ici tout moyen de lecture à distance sans liaison filaire, par exemple une liaison par radio-fréquence.

La solution selon l'invention permet ainsi d'empêcher l'utilisation d'une batterie non conforme, qui pourrait diminuer la fiabilité du terminal, ce qui n'est pas compatible avec le caractère sensible du type de transaction en jeu. La conformité n'est cependant pas décidée une fois pour toute (par exemple par l'inscription de références acceptables au moment de la fabrication du terminal). Au contraire, la conformité est contrôlée auprès d'un serveur, qui peut être mis à jour régulièrement.

Ainsi, il est possible de déclarer conforme une batterie dont les références n'existaient pas au moment de la fabrication du terminal, par exemple parce qu'elles mettent en oeuvre une nouvelle technologie (dont la conformité a été testée par rapport au terminal) et/ou parce qu'elles sont fabriqués par un nouveau fournisseur. Cette approche permet également de déclarer non conforme des batteries préalablement acceptées, par exemple parce qu'une défaillance ou un risque a été identifiée.

L'approche de l'invention permet également, dans certains modes de réalisation, de contrôler des dates de péremption, en interdisant l'usage de batteries dont la date de péremption est dépassée.

Le comportement du terminal lors de la détection d'une batterie non conforme peut différer selon les modes de réalisation de l'invention.

Ainsi, dans certains modes de réalisation de l'invention, le terminal comprend des moyens de génération d'au moins une alarme, si lesdits moyens de réception ne recoivent pas ledits information de conformité.

Dans un mode particulier de réalisation, ledit terminal peut se bloquer complètement, rendant son utilisation impossible, le cas échéant après un certain laps de temps pendant lequel des opérations particulières peuvent être effectuées.

Dans un autre mode particulier de réalisation (compatible avec le précédent), ledit terminal peut émettre un message d'alerte. Le message d'alerte peut être généré de façons diverses, par exemple par l'intermédiaire d'un afficheur, d'une impression, d'un mécanisme de synthèse vocale, de l'émission d'un message téléphonique ou SMS. L'alerte selon l'invention peut être destinée à l'utilisateur ou au propriétaire dudit terminal. Elle peut également être générée vers un tiers, par exemple vers le constructeur dudit terminal, afin de l'avertir de l'éventualité d'une contrefaçon.

Selon un mode de réalisation avantageux de l'invention, lesdits moyens de lecture sans contact sont activés selon au moins un des modes d'interrogation appartenant au groupe comprenant :
- une interrogation systématique au moment de l'allumage et/ou de l'extinction dudit terminal ;
- une interrogation périodique ;
- une interrogation suite à au moins une action particulière sur ledit terminal ;
- une interrogation dans un état particulier dudit terminal.

Dans certains modes de réalisation, lesdits moyens de lecture sans contact et ladite puce mettent en oeuvre au moins une des techniques de communication appartenant au groupe comprenant :
- une technologie Bluetooth ;
- une technologie RFID.

Selon des modes particuliers de réalisation de l'invention, lesdits moyens de lecture sans contact sont aptes à communiquer avec des puces équipant des supports de paiement électronique. La solution selon l'invention offre ainsi l'avantage de pouvoir utiliser le même lecteur sans contact dudit terminal pour communiquer avec ladite puce et pour communiquer avec d'autres puces équipant des supports de paiement électronique.

Dans une autre mise en oeuvre de l'invention ledit terminal comprend des moyens de stockage d'au moins une référence et/ou un identifiant de ladite batterie amovible.

Dans un autre mode de réalisation, ledit terminal peut aussi enregistrer au moins une information représentative d'une non-conformité, par exemple pour dater la détection de la batterie non conforme et/ou pour garder trace d'au moins un paramètre fourni par la puce, et dégager ainsi la responsabilité du constructeur en cas de dysfonctionnement ultérieur.

Une au moins des informations enregistrées peut aussi être liée au fonctionnement ou à l'état du terminal lui-même, par exemple pour disposer d'un historique des dernières transactions réalisées en cas d'incident.

Les technologies utilisées pour la mise en oeuvre de l'invention, comme par exemple les technologies Bluetooth ou RFID, offrent l'avantage de permettre la réalisation de puces à moindre coût et donc sans contrainte de réutilisation.

Dans certains modes avantageux de réalisation de l'invention, ladite puce est solidarisée de façon à empêcher le fonctionnement de ladite puce en cas d'extraction et/ou de tentative d'extraction. Cette solution permet alors d'éviter le clonage ou la réutilisation d'une puce dans le but d'équiper des équipements contrefaits.

On peut ainsi par exemple placer les puces au coeur de batteries fondues dans un plastique spécial.

L'invention concerne également un procédé de vérification de conformité d'au moins une batterie amovible d'un terminal de paiement électronique portable, conforme à le revendication 6 de l'invention.

Ainsi, le procédé permet une vérification de conformité d'au moins une batterie amovible d'un terminal de paiement électronique portable, de façon fiable et en tenant compte d'informations pouvant être mises à jour régulièrement dans le serveur.

Dans certains modes de réalisation de l'invention, le procédé prévoit que ladite réponse de ladite puce comprenne au moins un code d'identification de ladite batterie amovible. Ainsi, ladite réponse permettra en particulier d'authentifier ladite batterie amovible.

Dans un mode particulier de réalisation (compatible avec le mode de réalisation précédent), ladite réponse de ladite puce comprend également au moins une information sur un état de fonctionnement et/ou un paramètre de ladite batterie amovible.

Il peut s'agir par exemple de son autonomie, de son temps de charge, de son cycle de décharge, de ses caractéristiques électriques ou de toute autre caractéristique pouvant influencer le fonctionnement dudit terminal.

Dans des modes particuliers de réalisation, ladite étape de décision de conformité comprend une vérification d'une information d'identification fournie par ladite puce auprès d'un serveur de contrôle distant.

Par exemple, le terminal contrôle alors la validité de l'information d'identification fournie en accédant à un site « web » du constructeur, qui lui délivre une information de conformité ou de non-conformité en fonction de l'appartenance de ladite information d'identification à une liste homologuée par ledit constructeur. En outre, le terminal peut s'assurer de la compatibilité de la batterie en fonction d'une caractéristique de fonctionnement reçue de la puce.

Selon l'invention, ladite étape de blocage dudit terminal comprend la mise en oeuvre d'au moins une action appartenant au groupe comprenant :
- une émission d'un message d'alerte ;
- un enregistrement par ledit terminal d'au moins une information représentative d'une non-conformité.

Enfin, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de vérification de conformité d'au moins une batterie amovible d'un terminal de paiement électronique décrit précédemment.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels:
- la figure 1 présente un synoptique fonctionnel de l'invention dans un mode de réalisation,
- la figure 2 illustre le fonctionnement dynamique de l'invention, basé sur le synoptique statique de la figure 1.

### 6. Description d'un mode de réalisation de l'invention

### 6.1 Principe général

L'invention concerne la vérification de conformité d'au moins une batterie amovible d'un terminal de paiement électronique portable. Cette batterie porte, selon l'invention, une puce électronique apte à communiquer sans contact, dès son insertion dans ledit terminal et/ou au cours de son utilisation, en utilisant les moyens de lecture sans contact du terminal.

Les informations transmises par la puce sont ensuite communiquées à un serveur distant, qui informe en conséquence le terminal de la conformité de la batterie. Ainsi, ce n'est pas le terminal qui décide, de lui-même, d'accepter ou non la batterie. La conformité, et donc l'acceptabilité, est délivrée par un serveur distant, détenant des données mises à jour sur les batteries conformes.

On peut de cette façon empêcher ou limiter l'utilisation d'une batterie non conforme, qui pourrait diminuer la fiabilité du terminal, ce qui n'est pas compatible avec le caractère sensible du type de transaction enjeu. La conformité n'est cependant pas décidée une fois pour toute (par exemple par l'inscription de références acceptables au moment de la fabrication du terminal). Au contraire, la conformité est contrôlée auprès d'un serveur, qui peut être mis à jour régulièrement.

Ainsi, il est possible de déclarer conforme une batterie dont les références n'existaient pas au moment de la fabrication du terminal, par exemple parce qu'elles mettent en oeuvre une nouvelle technologie (dont la conformité a été testée par rapport au terminal) et/ou parce qu'elles sont fabriqués par un nouveau fournisseur agréé. Cette approche permet également de déclarer non conforme des batteries préalablement acceptées, par exemple parce qu'une défaillance ou un risque a été identifiée.

L'approche de l'invention permet également, dans certains modes de réalisation, de contrôler des dates de péremption, en interdisant l'usage de batteries dont la date de péremption est dépassée.

### 6.2 Description d'un mode de réalisation particulier

On considère par la suite un exemple de mise en oeuvre de l'invention appliqué à un terminal mobile de paiement électronique, dans le but de détecter, et d'éviter le cas échéant, l'utilisation d'une batterie amovible non conforme.

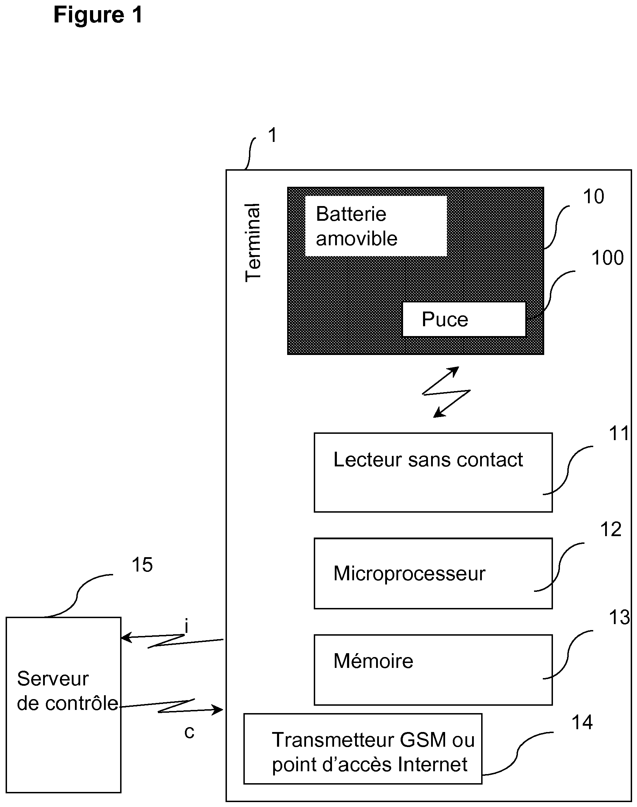

On présente, en relation avec la figure 1, un mode de réalisation particulier d'un terminal de paiement électronique mobile 1 selon l'invention. Ce terminal 1 comprend une unité centrale de traitement et de contrôle (microprocesseur 12) apte à traiter des données, et coopérant avec une mémoire 13, apte en particulier à stocker au moins une information correspondant à une caractéristique d'identification de la puce de la batterie.

Le terminal 1 comprend aussi un lecteur sans contact 11 apte à communiquer par radio-fréquence avec des puces RFID (Radio Frequency IDentification). Ce lecteur sans contact 11 est, dans le présent mode de réalisation, destiné principalement à communiquer avec des supports, ou cartes, de paiement électronique équipés de puces RFID.

Enfin, pour fonctionner, le terminal doit être équipé d'une batterie amovible 10.

Dans le procédé selon l'invention, la batterie 10 utilisée contient une puce 100, apte à stocker et à émettre des données (liées à l'identification de la batterie et/ou à son fonctionnement). Dans le mode particulier de réalisation décrit ici, il s'agit d'une puce RFID.

Dans un autre mode de réalisation, les moyens de communication de la puce 100 et du lecteur sans contact 11 peuvent mettre en oeuvre une autre technologie, par exemple la technologie Bluetooth.

Cette puce 100 est de préférence rendue inaccessible, à l'intérieur de la batterie (dans laquelle elle peut par exemple être noyée) ou de son revêtement, de façon à éviter des tentatives de récupération de puces pour les associer à des batteries non conformes.

On peut également prévoir que la puce comprenne des moyens d'autodestruction, de passage dans un état particulier et/ou d'émission d'un signal d'alerte lorsqu'elle détecte une tentative de séparation de la batterie (par exemple par déconnexion d'une liaison électrique avec la batterie).

Dans un mode particulier de réalisation, le terminal 1 comprend aussi un transmetteur GSM ou un point d'accès 14 à un réseau de type Internet. Il est ainsi apte à communiquer avec un équipement de communication du constructeur du terminal, comme le serveur de contrôle 15 du constructeur, afin de s'assurer de la conformité de la batterie, en lui fournissant une information d'identification (I) de la batterie et en recevant en retour une information de conformité (C), et/ou de l'avertir de l'éventualité d'une contrefaçon.

Dans un autre mode particulier de réalisation, alternatif ou complémentaire, le terminal 1 peut comporter un moyen d'émission d'une alerte vers un utilisateur. Ce moyen d'émission peut être divers : par exemple, il peut notamment s'agir d'un moyen de synthèse vocale, d'un afficheur, d'un moyen d'impression d'un ticket, d'une alerte par SMS ou MMS.

Il est à noter que les fréquences qu'utilise, selon l'invention, le lecteur sans contact 11 pour communiquer avec une puce 100 sont adaptées aux communications en champ proche afin de limiter la portée géographique des radio-communications aux équipements contenus dans le terminal et donc de rendre ainsi le procédé apte à ne pas confondre la puce équipant un terminal voisin avec celle sensée être présente dans son propre terminal.

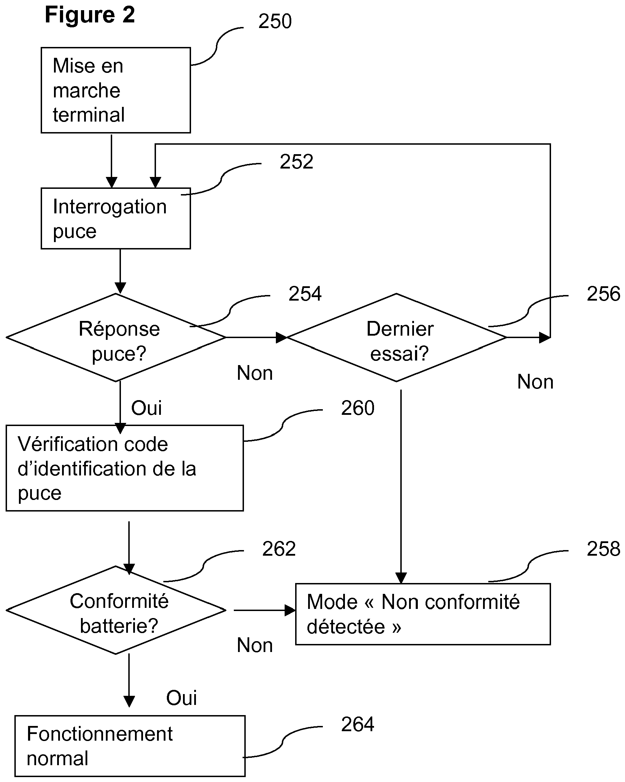

On présente maintenant, en relation avec la figure 2, les principales étapes d'un exemple de procédé mis en oeuvre dans le terminal de la figure 1, selon l'invention.

Dans ce mode particulier de réalisation, la mise en marche du terminal 250 entraîne l'activation d'une étape 252 d'interrogation de la puce présente sur la batterie. Cette interrogation se fait par exemple par l'émission d'un signal d'interrogation radio-fréquence. Ce signal d'interrogation est émis vers la puce avec une énergie suffisante pour permettre à celle-ci de lui répondre.

Le terminal attend alors une réponse de la puce de la batterie. C'est l'étape 254 de réception d'une réponse.

La réponse attendue par le terminal est, dans ce mode particulier de réalisation, la fourniture d'un code correspondant au type de batterie à utiliser sur ce terminal. Ce code peut être basé sur différents standards, comme par exemple sur le standard EP-96.

En cas d'absence de réponse de la puce à l'étape 254, le lecteur peut réitérer un certain nombre de fois son interrogation 252 de la puce. Si, après un dernier essai 256, le lecteur n'a toujours aucune réponse, le microprocesseur interprète cette absence de réponse comme une non-conformité de la batterie (étape de décision sur la conformité) et passe en mode « Non conformité détectée » 258.

En cas de réponse de la puce à l'étape 254, le procédé prévoit une étape de décision quant à la conformité de la batterie par vérification 260 du code d'identification reçu.

L'étape de décision de conformité peut comprendre une vérification du code reçu auprès d'au moins un serveur de contrôle distant du constructeur afin de s'assurer de l'appartenance dudit code à une liste de codes acceptés.

Cette vérification comprend en particulier la transmission à un serveur de contrôle du constructeur du code d'identification reçu (I) puis la réception 262 d'une information de conformité ou de non-conformité (C) de la part de ce serveur.

Si la vérification conduit à diagnostiquer la conformité de la batterie (réception d'une information de conformité du serveur), le terminal est considéré comme ayant alors un fonctionnement normal 264. Dans le cas contraire (réception d'une information de non-conformité du serveur ou absence de réponse du serveur par exemple), le terminal passe en mode « Non conformité détectée » 258.

Une batterie peut être considérée conforme par le serveur si elle a été préalablement été homologuée, ou au moins testée et validée, par le gestionnaire du site (qui peut être le fabricant du terminal ou un tiers de confiance) ou déclarée conforme par une personne habilitée (classiquement le fabricant du terminal). Ainsi, les batteries considérées conformes peuvent changer au cours du temps, sans qu'il soit nécessaire de re-programmer le terminal. C'est le serveur qui décide de la conformité, et qui peut notamment, selon les modes de réalisation :
- déclarer conforme une nouvelle batterie (nouvelle technologie et/ou nouveau fournisseur par exemple) ;
- déclarer non conforme une batterie préalablement non conforme ;
- déclarer conforme ou non conforme une batterie selon :
   - une date de péremption de la batterie ;
   - des conditions d'utilisation ou d'application particulières ;
   - des caractéristiques du terminal ; et/ou
   - des contraintes réglementaires ou normatives.

L'étape de réaction du terminal en cas de détection d'une non conformité de la batterie (« Non conformité détectée » 258) dépend des modes particuliers de réalisation du procédé. Ainsi, par exemple, le terminal peut se bloquer pour éviter d'être détérioré par une batterie de remplacement défectueuse. Il peut aussi générer une alerte vers l'utilisateur ou vers le propriétaire du terminal par synthèse vocale, par le biais de l'impression d'un ticket ou par le biais d'un afficheur.

Dans un mode de réalisation particulier, le terminal peut continuer de fonctionner, le cas échéant dans un mode dégradé. Il peut alors enregistrer par contre au moins une information particulière. Par exemple, il peut enregistrer la date, l'heure ou la nature de la non-conformité détectée ou les dernières transactions effectuées afin de pouvoir disposer d'un historique en cas d'anomalies.

Un laps de temps (ou un nombre d'opérations spécifiques) peut être accordé, pendant lequel le terminal fonctionne, pour laisser le temps à l'utilisateur d'effectuer certaines opérations en cours ou urgentes, et lui permettre de changer la batterie.

Ces caractéristiques sont optionnelles.

Dans une variante du mode de réalisation décrit ci-dessus, l'interrogation de la puce peut être réalisée de façon périodique, ou lors d'actions spécifiques effectuées sur le terminal, comme par exemple avant chaque transaction bancaire, ou lors du passage dans un état particulier du terminal, comme par exemple un certain niveau de charge de la batterie, ou lors de son extinction.

Dans une autre variante de réalisation, la décision de conformité peut aussi s'appuyer, en sus de l'information de conformité, sur la réception d'au moins une caractéristique de fonctionnement de la batterie, comme sa capacité de charge, sa capacité d'autonomie ou une de ses caractéristiques électriques par exemple, et/ou sa comparaison avec une valeur seuil attendue correspondant à une qualité minimale.

Dans ce cas, le serveur peut décider de la conformité non seulement au vu d'une information de conformité absolue, mais également en vérifiant que la batterie a bien les caractéristiques attendues dans une telle batterie, c'est à dire en vérifiant qu'il ne s'agit pas d'une batterie défectueuse, ou que les caractéristiques de la batterie conviennent au terminal considéré (qui doit alors fournir, en plus du code d'identification de la batterie, son propre identifiant, ou des informations permettant une telle évaluation), à l'application et/ou l'utilisation de ce terminal (utilisation en extérieur, distance maximale avec une base, contraintes de sécurité particulières, respect d'une norme ou d'une loi,...).

On peut notamment prévoir que, lors de la première détection de la puce (c'est-à-dire lorsque la batterie vient d'être changée, ou que le terminal a été ré-initialisé), un échange avec un serveur de données, par exemple via le réseau téléphonique auquel est connecté le terminal, soit mis en oeuvre, pour vérifier l'origine de la batterie, et le cas échéant l'activer.

Par exemple, lors de cette première utilisation, la puce délivre un code d'identification, qui doit être fourni au serveur. Celui-ci retourne, en réponse, un code de déblocage, que le terminal transmet à la puce RFID. Celle-ci autorise alors l'utilisation de la batterie.

On peut également prévoir que ce déblocage nécessite, en remplacement ou en complément, la fourniture d'information de la part du titulaire du terminal, par exemple par l'intermédiaire du clavier de ce dernier. Il peut s'agir d'un identifiant du terminal et/ou d'un code fourni avec la batterie (sur son emballage ou directement sur celle-ci).

L'invention permet ainsi aux utilisateurs d'avoir l'assurance que le terminal est muni de batteries amovibles, conformes, sûres et homologuées, ce qui est essentiel pour des appareils devant gérer des transferts financiers. Elle permet également aux constructeurs d'identifier l'origine d'un éventuel dysfonctionnement d'un terminal après utilisation d'une batterie amovible non conforme. Dans ce but, certaines variantes de l'invention comprennent, lors de l'étape de réaction du terminal en cas de détection d'une non-conformité, une sous-étape de stockage d'éléments permettant de caractériser la non conformité.

La liaison avec le constructeur peut être maintenue pendant toute la durée de vie de la batterie, par exemple par communication téléphonique ou via un réseau de type Internet. Ceci peut notamment permettre au constructeur de vérifier l'état de la batterie, et le cas échéant recommander son changement, voire décider l'envoi d'une nouvelle batterie à l'utilisateur.

L'invention permet également de lutter contre les contrefaçons. Dans une variante de réalisation, le terminal peut ainsi avertir le constructeur du terminal ou une entité de contrôle de la détection d'une batterie potentiellement contrefaite.

## Revendications

1. Terminal de paiement électronique portable (1), comprenant au moins une batterie amovible (10), ladite batterie amovible (10) portant une puce électronique (100) contenant au moins une information d'identification relative à ladite batterie (10) et étant apte à communiquer avec des moyens de lecture sans contact présents dans ledit terminal (1), ledit terminal (1) comprenant des moyens de communication avec un serveur de contrôle (15), ledit terminal (1) comprenant :
- des moyens de transmission par le terminal (1) de ladite information d'identification audit serveur de contrôle (15) lors de l'allumage et/ou de la réinitialisation du terminal (1), et/ou de l'insertion d'une batterie (10) dans le terminal (1), et/ou du passage dans un état particulier dudit terminal (1) et/ou avant chaque transaction bancaire depuis le terminal (1) et/ou à intervalles réguliers ;
- des moyens de réception de la part dudit serveur (15) d'une information de conformité si ladite information d'identification appartient à une liste d'informations d'identification de batteries homologuées, mise à jour par ledit constructeur dudit terminal (1) et stockée dans ledit serveur (15);
- des moyens de blocage dudit terminal (1), si lesdits moyens de réception ne reçoivent pas ladite information de conformité.

2. Terminal de paiement électronique portable (1) selon la revendication 1 **caractérisé en ce qu'**il comprend des moyens de génération d'au moins une alarme, si lesdits moyens de réception ne reçoivent pas ladite information de conformité.

3. Terminal (1) selon l'une quelconque des revendications 1 à 2, **caractérisé en ce que** lesdits moyens de lecture sans contact et ladite puce (100) mettent en oeuvre au moins une des techniques de communication appartenant au groupe comprenant :
- une technologie Bluetooth ;
- une technologie RFID.

4. Terminal (1) selon l'une quelconque des revendications 1 à 3, **caractérisé en ce que** lesdits moyens de lecture sans contact sont aptes à communiquer avec des puces équipant des supports de paiement électronique.

5. Terminal (1) selon l'une quelconque des revendications 1 à 4, **caractérisé en ce qu'**il comprend des moyens de stockage d'au moins une référence et/ou un identifiant de ladite batterie amovible (10).

6. Procédé de vérification de conformité d'au moins une batterie amovible (10) d'un terminal de paiement électronique portable (1), ladite batterie amovible (10) portant une puce électronique (100) contenant au moins une information d'identification relative à ladite batterie (10) et étant apte à communiquer avec des moyens de lecture sans contact présents dans ledit terminal (1), ledit terminal (1) comprenant des moyens de communication avec un serveur de contrôle (15),
ledit procédé comprend les étapes suivantes :
- émission d'un message d'interrogation vers ladite puce (100);
- réception d'une réponse de ladite puce (100) comportant ladite information d'identification ;
- décision sur la conformité de ladite batterie amovible (10) en fonction de ladite réponse de ladite puce (100) comprenant :
• une sous-étape de transmission par le terminal (1) de ladite information d'identification audit serveur de contrôle (15) lors de l'allumage et/ou de la réinitialisation du terminal (1), et/ou de l'insertion d'une batterie dans le terminal (1), et/ou du passage dans un état particulier dudit terminal (1) et/ou avant chaque transaction bancaire depuis le terminal (1) et/ou à intervalles réguliers ;
• une sous-étape de réception de la part dudit serveur (15) d'une information de conformité si ladite information d'identification appartient à une liste d'informations d'identification de batteries homologuées, mise à jour par ledit constructeur dudit terminal (1) et stockée dans ledit serveur (15);
- blocage dudit terminal (1), si lesdits moyens de réception ne reçoivent pas ladite information de conformité.

7. Procédé de vérification de conformité selon la revendication 6, **caractérisé en ce que** ladite réponse de ladite puce (100) comprend au moins une information sur un état de fonctionnement et/ou un paramètre de ladite batterie amovible (10).

8. Procédé de vérification de conformité selon l'une quelconque des revendications 6 à 7, **caractérisé en ce que** ladite étape de blocage dudit terminal (1) comprend la mise en oeuvre d'au moins une action appartenant au groupe comprenant :
- une émission d'un message d'alerte ;
- un enregistrement par ledit terminal (1) d'au moins une information représentative d'une non-conformité.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de vérification de conformité selon l'une au moins des revendications 6 à 8.

## Patentansprüche

1. Tragbares Endgerät zur elektronischen Bezahlung (1), umfassend mindestens einen abnehmbaren Akku (10), wobei der abnehmbare Akku (10) einen Mikrochip (100) trägt, der mindestens eine Identifikationsinformation in Bezug auf den Akku (10) enthält und geeignet ist, mit kontaktlosen Lesemitteln zu kommunizieren, die in dem Endgerät (1) vorhanden sind, wobei das Endgerät (1) Kommunikationsmittel mit einem Kontrollserver (15) aufweist,
wobei das Endgerät (1) aufweist:
- Mittel zum Übertragen durch das Endgerät (1) der Identifikationsinformation an den Kontrollserver (15) beim Einschalten und/oder Rücksetzen des Endgeräts (1) und/oder Einsetzen eines Akkus (10) in das Endgerät (1) und/oder Übergang in einen besonderen Zustand des Endgeräts (1) und/oder vor jeder Banktransaktion von dem Endgerät (1) und/oder in regelmäßigen Abständen;
- Mittel zum Empfangen durch den Server (15) von einer Konformitätsinformation, ob die Identifikationsinformation zu einer Liste von Identifikationsinformationen von zugelassenen Akkus gehört, die durch den Hersteller des Endgeräts (1) aktualisiert ist und in dem Server (15) gespeichert ist;
- Mittel zum Blockieren des Endgeräts (1), wenn die Mittel zum Empfangen die Konformitätsinformation nicht empfangen.

2. Tragbares Endgerät zur elektronischen Bezahlung (1) nach Anspruch 1, **dadurch gekennzeichnet, dass** es Mittel zum Erzeugen mindestens eines Alarms aufweist, wenn die Mittel zum Empfangen die Konformitätsinformation nicht empfangen.

3. Endgerät (1) nach einem der Ansprüche 1 bis 2, **dadurch gekennzeichnet, dass** die kontaktlosen Lesemittel und der Chip (100) mindestens eine der Kommunikationstechniken umsetzen, die zu der Gruppe gehören, umfassend:
- eine Bluetooth-Technologie;
- eine RFID-Technologie.

4. Endgerät (1) nach einem der Ansprüche 1 bis 3, **dadurch gekennzeichnet, dass** die kontaktlosen Lesemittel geeignet sind, mit den Chips zu kommunizieren, mit denen elektronische Zahlungsträger ausgestattet sind.

5. Endgerät (1) nach einem der Ansprüche 1 bis 4, **dadurch gekennzeichnet, dass** es Mittel zum Speichern von mindestens einer Referenz und/oder einer Kennung des abnehmbaren Akkus (10) aufweist.

6. Verfahren zur Konformitätsüberprüfung von mindestens einem abnehmbaren Akku (10) eines Endgeräts zur elektronischen Bezahlung (1), wobei der abnehmbare Akku (10) einen Mikrochip (100) trägt, der mindestens eine Identifikationsinformation in Bezug auf die Batterie (10) enthält und geeignet ist, mit kontaktlosen Lesemitteln zu kommunizieren, die in dem Endgerät (1) vorhanden sind, wobei das Endgerät (1) Kommunikationsmittel mit einem Kontrollserver (15) aufweist,
das Verfahren weist die folgenden Schritte auf:
- Senden einer Abfragenachricht zu dem Chip (100);
- Empfangen einer Antwort von dem Chip (100), die die Identifikationsinformation aufweist;
- Entscheiden über die Konformität des abnehmbaren Akkus (10) in Abhängigkeit von der Antwort von dem Chip (100), umfassend:
• einen Unterschritt des Übertragens durch das Endgerät (1) der Identifikationsinformation an den Kontrollserver (15) beim Einschalten und/oder Rücksetzen des Endgeräts (1) und/oder Einsetzen eines Akkus in das Endgerät (1) und/oder Übergang in einen besonderen Zustand des Endgeräts (1) und/oder vor jeder Banktransaktion von dem Endgerät (1) und/oder in regelmäßigen Abständen;
• einen Unterschritt des Empfangens durch den Server (15) von einer Konformitätsinformation, ob die Identifikationsinformation zu einer Liste von Identifikationsinformationen von zugelassenen Akkus gehört, die durch den Hersteller des Endgeräts (1) aktualisiert wird und in dem Server (15) gespeichert wird;
- Blockieren des Endgeräts (1), wenn die Mittel zum Empfangen die Konformitätsinformation nicht empfangen.

7. Verfahren zur Konformitätsüberprüfung nach Anspruch 6, **dadurch gekennzeichnet, dass** die Antwort des Chips (100) mindestens eine Informationen über einen Betriebszustand und/oder einen Parameter des abnehmbaren Akkus (10) aufweist.

8. Verfahren zur Konformitätsüberprüfung nach einem der Ansprüche 6 bis 7, **dadurch gekennzeichnet, dass** der Schritt des Blockieren des Endgeräts (1) das Umsetzen von mindestens einer der Handlungen aufweist, die zu der Gruppe gehören, umfassend:
- ein Senden eines Alarmsignals;
- ein Aufzeichnen durch das Endgerät (1) von mindestens einer Information, die für eine Nichtkonformität repräsentativ ist.

9. Computerprogrammprodukt, das von einem Kommunikationsnetz herunterladbar ist und/oder auf einem computerlesbaren Medium aufgezeichnet ist und/oder von einem Prozessor ausgeführt werden kann, **dadurch gekennzeichnet, dass** es Programmcodebefehle für die Ausführung des Verfahrens zur Konformitätsüberprüfung nach mindestens einem der Ansprüche 6 bis 8 aufweist.

## Claims

1. Portable electronic payment terminal (1), comprising at least one removable battery (10), said removable battery (10) carrying an electronic chip (100) containing at least one item of identification information related to said removable battery (10) and able to communicate with contactless reading means present in said terminal (1), said terminal (1) comprising means of communicating with a control server (15),
said terminal (1) comprising:
- means of transmitting by the terminal (1) said identification information to said control server (15) when switching the terminal (1) on and/or at reinitialisation of the terminal (1) and/or when a battery (10) is inserted in the terminal (1) and/or when going into a particular state of said terminal (1) and/or before each bank transaction from the terminal (1) and/or regularly;
- means of receiving from said server (15) conformity or non-conformity information according to whether said identification information belongs to a list of identification information approved by said manufacturer, updated by said manufacturer of said terminal (1) and stored in said server (15);
- means of blocking said terminal (1), if said means of receiving do not receive said conformity or non-conformity information.

2. Portable electronic payment terminal (1) according to claim 1, **characterised in that** it comprises means of generating at least one alarm, if said means of receiving do not receive said conformity or non-conformity information.

3. Terminal (1) according to any one of claims 1 to 2, **characterised in that** said contactless reading means and said chip (100) use at least one of the communication techniques belonging to the group comprising:
- Bluetooth technology;
- RFID technology.

4. Terminal (1) according to any one of claims 1 to 3, **characterised in that** said contactless reading means are able to communication with chips equipping electronic payment media.

5. Terminal (1) according to any one of claims 1 to 4, **characterised in that** it comprises means of storing at least one reference and/or an identifier of said removable battery (10).

6. Method of checking conformity of at least one removable battery (10) in a portable electronic payment terminal (1), said removable battery (10) carrying an electronic chip (100) containing at least one item of identification information related to said removable battery (10) and being able to communicate with contactless reading means present in said terminal (1), said terminal (1) comprising means of communicating with a control server (15),
said method comprises the following steps:
- sending an interrogation message to said chip (100) ;
- receiving a response from said chip (100) containing said identification information;
- deciding on the conformity of said removable battery (10) according to said response from said chip (100), comprising:
-- a substep of transmitting by said terminal (1) said identification information to said control server (15) when switching the terminal (1) on and/or at reinitialisation of the terminal (1) and/or when a battery (10) is inserted in the terminal (1) and/or when going into a particular state of said terminal (1) and/or before each bank transaction from the terminal (1) and/or regularly;
-- a substep of receiving from said server (15) conformity or non-conformity information according to whether said identification information belongs to a list of identification information approved by said manufacturer, updated by said manufacturer of said terminal (1) and stored in said server (15);
- blocking of said terminal (1), if said means of receiving do not receive said conformity or non-conformity information.

7. Method of checking conformity according to claim 6, **characterised in that** said response of said chip (100) comprises at least one item of information on a state of functioning and/or a parameter of said removable battery (10).

8. Method of checking conformity according to either one of claims 6 to 7, **characterised in that** said step of blocking of said terminal (1) comprises the implementation of at least one action belonging to the group comprising:
- sending of an alert message;
- recording by said terminal (1) of at least one item of information representing non-conformity.

9. Computer program product that can be downloaded from a communication network and/or recorded on a medium that can be read by computer and/or executed by a processor, **characterised in that** it comprises program code instructions for implementing the method of checking conformity according to at least one of claims 6 to 8.
